# EUROPEAN PATENT SPECIFICATION

(11) **EP 3 470 826 B1**
(45) Date of publication and mention of the grant of the patent: **28.08.2024**
(21) Application number: 16903013.7
(22) Date of filing: 26.05.2016
(51) Int. Cl.: G01N 21/95, C25C 7/06, G01N 21/88

(54) **SYSTEM FOR MONITORING ANODES USED IN ELECTROLYTIC PROCESSES**
SYSTEM ZUR ÜBERWACHUNG VON ANODEN IN ELEKTROLYTISCHEN VERFAHREN
SYSTÈME DE SUIVI DES ANODES UTILISÉES DANS LES PROCÉDÉS ÉLECTROLYTIQUES

(43) Date of publication of application: 17.04.2019
(73) Proprietor: Zincobre Ingenieria, S.L., 33202 Gijón (Asturias) (ES)
(72) Inventor: Lefèvre, Yves, 33202 Gijón (Asturias) (ES)
(74) Representative: Herrero & Asociados, S.L.
(86) International application number: PCT/ES2016/070398
(87) International publication number: WO 2017/203069

(56) References cited:
- EP-A1- 0 645 474
- WO-A1-2012/168498
- WO-A1-2012/168498
- WO-A1-2012/168501
- ES-A1- 2 107 328
- JP-A- 2001 107 277
- JP-A- 2001 107 277
- US-A1- 2009 136 122
- US-A1- 2009 136 122

## Description

The present invention relates to a system for monitoring the anodes used in electrolytic processes, which enables the changes the anode undergoes during said processes to be known and the conditioning thereof to be optimized.

### Background of the invention

Metals such as zinc can be obtained by means of electrolysis processes.

Electrolysis generally refers to the decomposition of chemical substances by means of electrical current. The designation, however, also applies to certain processes that use electrical current to obtain chemical compounds.

In the electrolytic processes carried out in electrolytic tanks, electric power is applied to the electrolytic solutions found in the tanks by means of two electrodes, anode and cathode, which conduct electricity metallically. The chemical changes caused by the electrical current take place inside the solution and precisely on the submerged surface of the electrodes.

The electrodes that receive the metallic deposit make up the cathodes, while the sheets or plates of metal on which the sediments and impurities are deposited are called anodes.

The anode found in electrolytic processes comprises a flat anodic plate of a certain thickness, on the surface of which a series of plastic insulators are distributed in order to avoid short circuits due to contact between plates, as well as plastic separators that facilitate the introduction of the anodes in the electrolytic tanks. In the tanks, the anode and cathode electrodes are arranged one after the other in parallel at a certain distance. The electrical current flows from anode to cathode through the electrolyte and enters the system through the positive terminal such that the anodes are those that introduce the current into the system, passing the current through the electrolyte solution and exiting through the cathodes. When inside the tank, the electrodes must maintain the necessary distance between each other in order to guarantee operating conditions. Direct contact between anodes and cathodes may occur when the electrodes are removed from or introduced into the tanks. The installation of insulators is anticipated in order to maintain a certain distance between the electrodes in some anode models. Insulators made of a dielectric material resistant to the acid environment ensure adequate separation between the electrodes.

Due to the environment and the type of cleaning to which the anodes are subjected, the deterioration thereof is remarkable, which is evidenced in the loss of dimension experienced by the material, the wear, loss and soiling of the insulators and plastic separators. Furthermore, once subjected to successive cycles of electrolysis and conditioning, and favored by their high weight, the anodes can change their dimensions, more particularly their longitudinal dimensions. When the anode sheet is lengthened longitudinally, it can reach the bottom of the tank, where, over time, the sludge from the separation of impurities from the anodes themselves has accumulated. If at a certain point in time the anode sheets reach the level of sludge and come into contact with it, a short circuit may occur.

For all these reasons, knowledge of the evolution of the amount of matter, the surface area and the geometry of the anode in electrolysis and conditioning cycles, is essential for maintaining the efficiency of the electrochemical process.

Verification on the anodic plates can be carried out by means of visual inspection by specialized operators who separate the worn plates for reconditioning or permanent removal. This visual inspection is unreliable in that the assessment depends on the professional criteria of the operator, in addition to being time-consuming and difficult to standardize.

Anode monitoring systems by means of systematized processes are also known.

For example, the patent document with publication number US2009136122 describes a system for inspecting anodes comprising an image capture system for obtaining images of one side of the anode and a data processor for obtaining anode characteristics based on the extracted data. This system, which only has one image capture system, does not obtain all the possible information on the anode, making it impossible to improve the method to the fullest possible extent.

International application under publication number WO2012168501 describes a system for verifying the quality of anodes used in electrolytic processes, which has at least two image capture devices, one facing the first face of the anodic plate and a second image capture device facing the second face of the anodic plate; a control unit connected to the image capture system. Said application was focused on a study of the surfaces of the anodes and is aimed at observing the anodes that have to be changed in case of deterioration.

Document WO 2012/168498 A1 discloses a scrubbing system for scrubbing insulators of an anode.

Therefore, as shown in the state of the art, a system for monitoring the evolution of anodes that enables the relationship thereof with the electrolytic process to be studied and the conditioning thereof to be optimized, is of great interest.

### Description of the invention

The object is achieved by the monitoring system for anodes used in an electrolytic process as defined in claim 1.

The inventors have found a system for monitoring anodes that enables the automatic processing of the reconditioning of the anodes that have been used in electrolytic tanks. By monitoring the evolution of the anode and the possible deterioration thereof, it enables the relationship of the anode with the electrolytic process to be studied and the conditioning of the anodes to be optimized.

The deterioration of the anodes is manifested by: loss of material from the anodic plate; longitudinal lengthening of the anodic plate; wear, dirt and loss of insulators that prevent short circuits due to contact between plates; wear and loss of the plastic separators that make it easier to insert the anodes into the electrolytic tanks and loss of flatness of the anodic plate. The dirt deposited on the insulators is a direct consequence of the gradual lengthening of the anodic plate. Said lengthening causes the position of these insulators to be variable, reducing the efficiency of the conditioning elements used to clean the anodic plates. The performance of the electrolytic process benefits from the system of the present invention that enables the correct alignment of the conditioning elements used for cleaning, ensuring proper cleaning of the insulators.

The assembly of the anodes that are to be conditioned is housed in a transfer wagon, which transports the anodes from the electrolytic tank for their sequential treatment in a scrubbing station, a tampering station and an inspection station.

The anodes have a remotely detectable information support, which stores the identification of the anode.

If, once the anode has been inspected, it complies with the conditions for reuse, the anode is transported back to the electrolytic tank housed in the transfer wagon. If it does not comply with the conditions for reuse, the anode is taken by the transfer wagon to a rejection station, the main function of which is replacing those anodes that are marked as faulty by the inspection station.

In the inspection station the system is equipped with: a weighing system, an image capture system and an anode tracking system, a control unit connected to the image capture system and the weighing system, a recording unit and a lifting system.

The weighing system collects the data for determining anode weight loss. In an embodiment, the weighing system is carried out by means of an assembly of load cells and transmitting equipment for processing and converting the signal generated by said assembly into a standardized proportional format that enables connection thereof directly to a control unit.

The image capture system, which collects information from each face of the anode, comprises at least one first image capture device facing the first face of the anodic plate and at least one second image capture device facing the second face of the anodic plate, in order to capture successive digitized images of successive horizontal strips of the respective faces of the anodic plate when there is a relative displacement between said image capture devices and the anodic plate. In a preferred embodiment, the image capture system is a laser triangulation system.

The tracking system of the invention is intended to control at all times the location and the characteristics of the anode in the electrolytic process. The tracking system enables each anode to be unequivocally distinguished and the results of the measurements of the system to be linked thereto. In a particular embodiment, the tracking system is an RFID antenna and an RFID reader complementary to a Tag located on the anode.

The control unit is connected to the anode image capture, weighing and tracking systems. Said unit is provided with comparing means for comparing captured parameters of each image, with reference parameters of at least one digitized reference image of the faces of an intact anodic plate, comprised in the memory means. In a similar way, it is possible to compare whether the weight of the anode falls within the range defined by the maximum and minimum weight parameters of an anodic reference plate for the electrolytic process.

In an embodiment of the invention, the reference parameters are selected from first parameters identifying the positions of the insulators on the reference plate; second parameters identifying the dimensions of each intact insulator; third parameters identifying the length of the reference plate; fourth parameters identifying the state of the surface of the reference plate; fifth parameters identifying the contour of the reference plate; sixth parameters identifying each of the intact separators; seventh parameters identifying the weight of the anodic reference plate and combinations of these identifying parameters.

Thus, the comparison of the measurements made with the first identifying parameters it enables the lack of one or more insulators on the inspected anodic plate to be detected; with the second identifying parameters it enables breakages and excessive wear of one or more insulators in the inspected anodic plate to be detected; with the third parameters it enables an excessive elongation of the inspected anodic plate to be detected; with the fourth it enables parameter breakages, material faults, waste deposits and flatness defects to be detected on the inspected anodic plate; with the fifth parameters it enables deficiencies in the edges of the inspected anodic plate to be detected; with the sixth parameters it enables breakages, wear or lack of separators of the inspected anodic plate to be detected; with the seventh identifying parameters it enables the material decrease of the anodic plate.

The recording unit of the system stores on a memory device the dimensional and weight measurements that characterize each anode, which enables the variation thereof to be observed over time and evaluate the effect that variations of the electrolytic process or of the reconditioning can have on the deterioration of the anodic sheet.

The system can also comprise captured image filing means and image processing means connected to the comparing means to include, in each image captured of a complete anodic plate, an identification of at least a lack of compliance through the captured image of at least one reference parameter type that has been detected by the comparing means, and display means, such as for example a screen, to display each image captured of the complete anodic plate that includes said identification.

Therefore, an aspect of the invention relates to a monitoring system for electrodes used in electrolytic processes of the type having an inspection station, a scrubbing station and a tampering station characterized in that:
the inspection station of the surface of the anodes and of the insulating elements thereof that are on said surface comprises:
   a) a weighing system that has a load cell assembly and transmitting equipment for transmitting the information to a control unit;
   b) an anode tracking system;
   c) an image capture system;
   d) a control unit connected to the anode image capture, weighing and tracking system provided with means for comparing the parameters captured through the image capture and weighing system with reference parameters;
   e) a recording unit that processes and stores the captured data; and
   f) an anode lifting system
the scrubbing station comprises:
   an anode lifting system with control means of the position that receive information on the position of the insulators of the control unit.

In a preferred embodiment, the system comprises a rejection unit, which comprises an autonomous system, preferably a robot, the main function of which is replacing those anodes that are marked as faulty by the inspection station.

In a preferred embodiment, the stations are located on frames.

In a preferred embodiment, the lifting system that the stations have, the purpose of which is to lift the anode in order to carry out the corresponding specific treatment, is embodied by a trolley actuated by a geared motor controlled by a inverter with braking resistors and has a holding brake. The position of the trolley is controlled by means of an encoder, as well as detectors at specific points.

According to a preferred embodiment of the invention, the system includes, in the frame of the inspection station, an assembly of load cells located such that they support the anode lifting system. By subtracting the weight of the lifting system (tare), it is possible to obtain that of the inspected anode. Additionally, transmitting equipment carries out the processing and conversion of the signal generated by said cells, into a standardized proportional format that enables connection thereof directly to a control unit.

Preferably, in the inspection station, air is blown on the surface of the anode in order to remove the droplets of water that may remain on the surface of the anode as a result of the prior conditioning thereof in the scrubbing and tampering stations and can disrupt the inspection of the surface. More preferably, the blowing is carried out by means of air knives.

### Brief description of the drawings

For the purpose of helping to make the foregoing description more readily understandable, it is accompanied by a set of drawings which, schematically and by way of illustration and not limitation, represent an embodiment.
FIG. 1 shows a perspective view of the monitoring system of the invention.
FIG. 2A shows a perspective view of the anode in the inspection station.
FIG. 2B shows a detailed view of the head of the anode.
FIG. 3 shows a detailed view of the upper portion of the inspection station that shows the location of the load cells.
FIG. 4 shows a detailed view of the lower portion of the inspection station that shows the position of air knives in said inspection.

### Description of a preferred embodiment

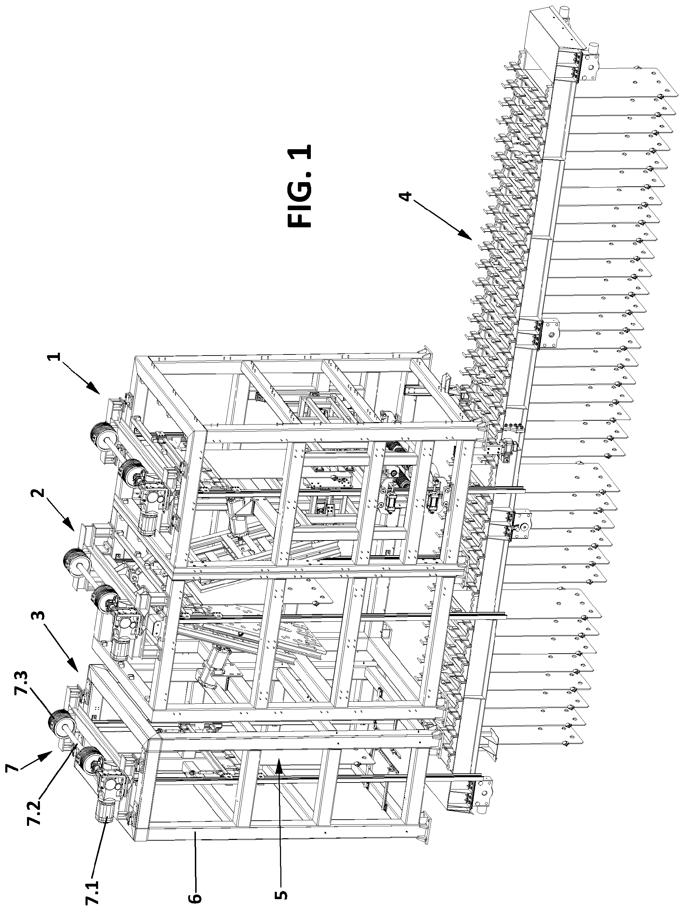

FIG. 1 shows a perspective view of the monitoring system of the invention. FIG. 1 shows the scrubbing station (1), the tampering station (2), the inspection station (3) to where the anodes are transported housed in a transfer wagon (4).

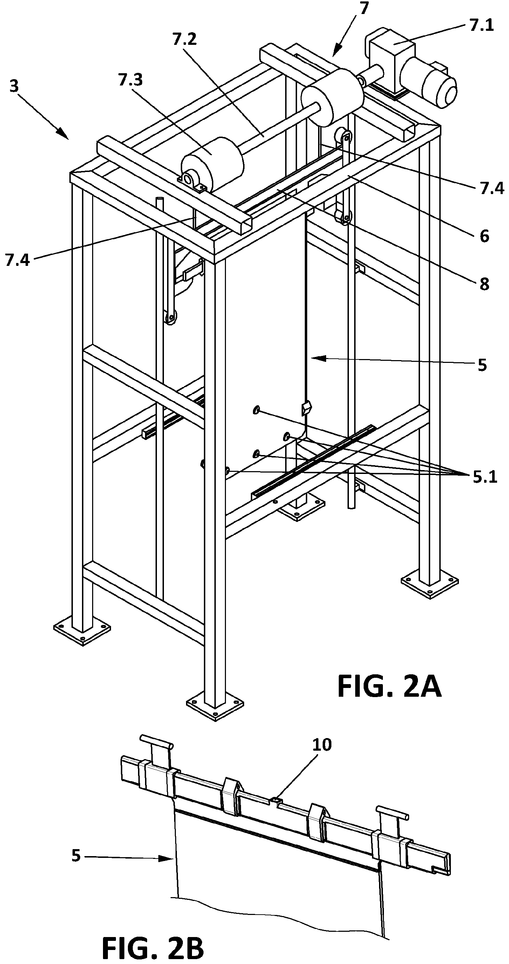

In accordance with a preferred embodiment, and as shown in FIG. 2, the anode (5) is provided with conventional insulators (5.1), on both faces thereof. The head of the anode is bar shaped with ends that project from the side edges of the anode plate. FIG. 2A shows the anode in the inspection station. Said station comprises a frame (6) with four vertical columns joined together by rails and cross beams.

A lifting system (7) is mounted on the upper portion of the frame (6) to lift and lower the anode (5) such that it moves vertically between the respective image capture devices (not shown) on two longitudinal support bars. The lifting device (7) comprises a motor group (7.1) that drives a transverse driving shaft (7.2) wherein at least two winding devices (7.3) of at least one cable (7.4) are mounted with an end portion coupled to a securing device (8) coupled to the head of the anode (5).

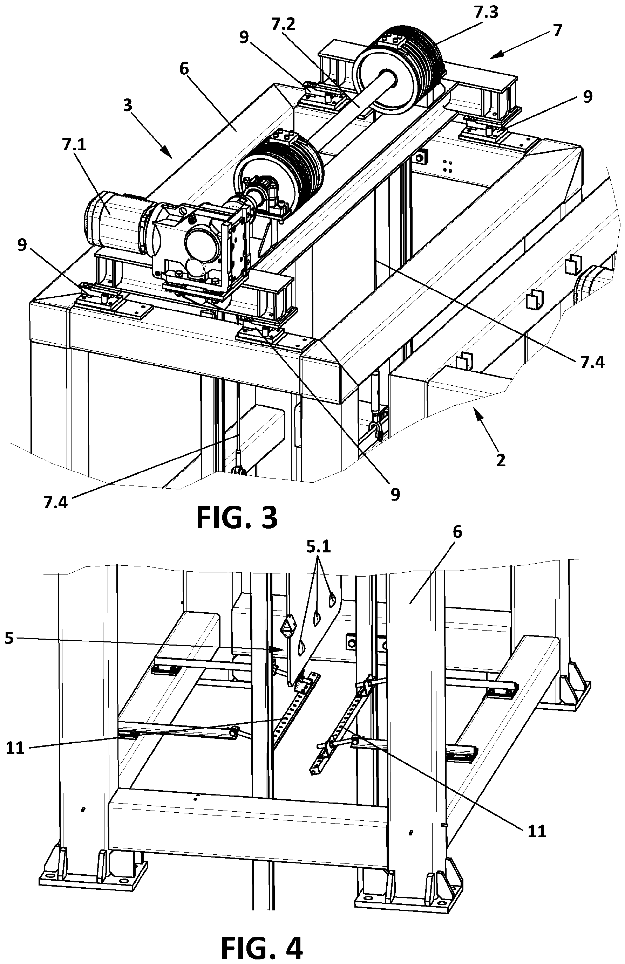

FIG. 3. shows the position of the weighing system in the inspection system embodied in four shear load cells (9) located on the frame (6) and located such that they support the lifting device (7). The signal from each one of the cells is connected as an infeed to a balanced summing box, the outfeed of which is the only signal that is connected to transmitting equipment equipped with a high resolution analog-to-digital converter, appropriate for the relationship between the weight of the anode and the tare in which a signal is generated in a standardized proportional format that enables the direct connection thereof to the control unit.

The tracking system in the inspection station is made up of a RFID antenna and a RFID reader. The RFID antenna is located on the frame at a distance suitable for detecting the Tag (10) on the anode, which has a unique code that is used as an identification key for the corresponding electrode. The reading of said code, in coordination with the control unit, enables the recording unit to store all the measurements carried out by the system, associating them to an electrode characterized by said unique code.

The identification Tag (10) is placed on the upper portion of the head of the anode, as shown in FIG. 2B. To do so, the head on the upper portion is machined and a plastic stopper is placed that separates the Tag (10) 5mm from the metal on the lower portion to ensure a correct reading. The Tag (10) is first positioned and then surrounded by a non-conducting, resin type material such that the Tag (10) is sufficiently separated from the metal.

The image capture system, not shown, in a particular embodiment has four identical laser triangulation equipment, mounted on the frame (6) of the inspection station, arranged so that 2 pairs of these pieces of equipment serve to inspect both faces of the anode.

Each one of the pieces of equipment has a horizontal laser source and the pair located on each side has an opening sufficient to include the inspection of the width of the anodes.

The inspection is carried out during the vertical movement of the anodes, which the lifting system (7) carries out integrated in the frame (6) of the inspection station. A signal is received from the transducer of the position of the lifting system (7) (encoder), to synchronize the acquisitions of the image capture system with the movement of the anode (5).

Each laser triangular equipment is complemented with a vertical line laser that, in combination with the horizontal triangulations, enables the complete shape of the surface and the real and apparent dimensions of the anode to be obtained, real being understood as that corresponding to the development of the surface after the flattening thereof, and apparent being that which would be seen with a 2D camera. This measurement enables the possible oscillation of the anode during the vertical lifting movement to be compensated and enables the flatness of the anode to be measured accurately.

Lastly, in the inspection station, air is blown on the surface of the anode using air knives (11) in order to remove the droplets of water that may remain on the surface of the anode (5) as a result of the prior conditioning thereof in the scrubbing (1) and tampering (2) stations. This blowing actuates due to a pneumatically operated high-flow valve, based on a solenoid valve controlled by the control unit. The drying of the anode removes the disruption that the water droplets suppose for the inspection.

In the scrubbing station (1) there is an assembly of brushes, one per insulator, the specific function of which is to clean the dirt deposited on said insulators. This assembly of brushes is mounted on two frames connected by means of both pneumatic cylinders. Each one of the rotating brushes is individually actuated by means of pneumatic motors. The lifting system is identical for all the stations and is actuated by an electric motor controlled by an inverter and likewise equipped with a position transducer (encoder). These elements enable the position of the anode to be controlled during the lifting thereof such that, the location of the insulators being known for a particular anode according to the measurement carried out in the inspection station that has been stored in the recording unit, it is possible to position the trolley of the lifting system in the position in which brushes and insulators are aligned, thus guaranteeing the efficiency of the conditioning process.

## Claims

1. A monitoring system for anodes used in an electrolytic process of the type comprising: an inspection station (3); a scrubbing station (1) and a tampering station (2);
the monitoring system further comprises:
- a transfer wagon which is configured for transporting the anodes housed in the transfer wagon from an electrolytic tank for a sequential treatment in the scrubbing station (1), the tampering station (2) and the inspection station (3);
- wherein the monitoring system is configured such that once the anode has been inspected, if it complies with the conditions for reuse, the anode is transported back to the electrolytic tank housed in the transfer wagon and if it does not comply with the condition for reuse, the anode is taken by the transfer wagon to a rejection station and
- wherein the inspection station (3) of the surface of the anodes (5) and the insulating elements (5.1) thereof that are on said surface in turn comprises:
a) a weighing system that has a load cell assembly (9) and transmitting equipment for transmitting the information to control unit;
b) an anode tracking system;
c) an image capture system;
d) a control unit connected to the anode image capture, weighing and tracking system provided with means for comparing the parameters captured by the image capture and weighing system with reference parameters;
e) a recording unit that processes and stores the captured data;
f) an anode lifting system and
g) anode blowing means (11); and
- wherein the scrubbing station (1) in turn comprises: an anode lifting system with control means of the position wherein the control means of the position receive information about the position of the insulators from the control unit.

2. Monitoring system according to claim 1, **characterized in that** the anode tracking system comprises a RFID antenna and a RFID reader complementary to a Tag (10) located on the anode.

3. Monitoring system according to any of claims 1-2, **characterized in that** the inspection station is located on a frame and the assembly of load cells are located on the frame supporting an anode lifting system (7).

4. Monitoring system according to any of claims 1-3, **characterized in that** the image capture system is a laser triangulation equipment.

5. Monitoring system according to any of claims 1-4, **characterized in that** the system comprises a rejection unit, which comprises a robot as an autonomous system for replacing those anodes that are marked as faulty by the inspection station.

## Patentansprüche

1. Überwachungssystem für Anoden, die in einem elektrolytischen Verfahren verwendet werden, von der Art, die umfasst: eine Inspektionsstation (3); eine Waschstation (1) und eine Manipulationsstation (2);
wobei das Überwachungssystem ferner umfasst:
- einen Transferwagen, der dazu eingerichtet ist, die in dem Transferwagen untergebrachten Anoden von einem elektrolytischen Tank zur aufeinanderfolgenden Behandlung in der Waschstation (1), der Manipulationsstation (2) und der Inspektionsstation (3) zu transportieren;
- wobei das Überwachungssystem derart eingerichtet ist, dass, sobald die Anode inspiziert worden ist, die Anode, wenn sie die Bedingung für die Wiederverwendung erfüllt, zurück zu dem in dem Transferwagen untergebrachten Elektrolyttank transportiert wird, und wenn sie die Bedingung für die Wiederverwendung nicht erfüllt, die Anode von dem Transferwagen zu einer Ausmusterungsstation gebracht wird, und
- wobei die Inspektionsstation (3) für die Oberfläche der Anoden (5) und deren Isolierelemente (5.1), die sich auf der Oberfläche befinden, wiederum umfasst:
a) ein Wägesystem, das eine Wägezellenanordnung (9) und eine Übertragungseinrichtung zum Übertragen der Informationen an eine Steuereinheit aufweist;
b) ein Anodenverfolgungssystem;
c) ein Bilderfassungssystem;
d) eine Steuereinheit, die mit dem Anoden-Bilderfassungs-, - Wäge- und -Verfolgungssystem verbunden ist und mit einer Einrichtung zum Vergleichen der von dem Bilderfassungs- und Wägesystem erfassten Parameter mit Referenzparametern ausgestattet ist;
e) eine Aufzeichnungseinheit, die die erfassten Daten verarbeitet und speichert;
f) ein Anodenhebesystem; und
g) eine Anodenblaseinrichtung (11); und
- wobei die Waschstation (1) ihrerseits umfasst: ein Anodenhebesystem mit einer Positionssteuereinrichtung, wobei die Positionssteuereinrichtung Informationen über die Position der Isolatoren der Steuereinheit empfängt.

2. Überwachungssystem nach Anspruch 1, **dadurch gekennzeichnet, dass** das Anodenverfolgungssystem eine RFID-Antenne und eine RFID-Lesevorrichtung komplementär zu einem an der Anode befindlichen Tag (10) umfasst.

3. Überwachungssystem nach einem der Ansprüche 1 bis 2, **dadurch gekennzeichnet, dass** die Inspektionsstation auf einem Rahmen angeordnet ist und die Anordnung der Wägezellen auf dem Rahmen angeordnet ist und ein Anodenhebesystem (7) trägt.

4. Überwachungssystem nach einem der Ansprüche 1 bis 3, **dadurch gekennzeichnet, dass** das Bilderfassungssystem eine Lasertriangulationsvorrichtung ist.

5. Überwachungssystem nach einem der Ansprüche 1 bis 4, **dadurch gekennzeichnet, dass** das System eine Ausmusterungseinheit umfasst, die einen Roboter als autonomes System zum Auswechseln derjenigen Anoden, die von der Inspektionsstation als fehlerhaft markiert wurden, umfasst.

## Revendications

1. Système de surveillance pour des anodes utilisées dans un processus électrolytique du type comprenant : un poste d'inspection (3) ; un poste de récurage (1) et un poste d'altération (2) ;
le système de surveillance comprend en outre :
- un wagon de transfert qui est configuré pour transporter les anodes logées dans le wagon de transfert depuis un réservoir électrolytique pour un traitement séquentiel dans le poste de récurage (1), le poste d'altération (2) et le poste d'inspection (3) ;
- dans lequel le système de surveillance est configuré de telle sorte que, une fois l'anode inspectée, si elle est conforme aux conditions de réutilisation, l'anode est transportée à nouveau dans le réservoir électrolytique logé dans le wagon de transfert, et si elle n'est pas conforme aux conditions de réutilisation, l'anode est acheminée par le wagon de transfert vers un poste de mise au rebut et
- dans lequel le poste d'inspection (3) de la surface des anodes (5) et des éléments isolants (5.1) de celles-ci qui se trouvent sur ladite surface comprend à son tour :
a) un système de pesage qui a un ensemble de cellules de pesée (9) et un équipement de transmission pour transmettre les informations à une unité de commande ;
b) un système de suivi d'anode ;
c) un système de capture d'image ;
d) une unité de commande connectée au système de capture d'image, de pesage et de suivi d'anode dotée de moyens pour comparer les paramètres capturés par le système de capture d'image et de pesage avec des paramètres de référence ;
e) une unité d'enregistrement qui traite et stocke les données capturées ;
f) un système de levage d'anode et
g) des moyens de soufflage d'anode (11) ; et
- dans lequel le poste de récurage (1) comprend à son tour : un système de levage d'anode avec des moyens de commande de la position dans lequel les moyens de commande de la position reçoivent des informations concernant la position des isolateurs provenant de l'unité de commande.

2. Système de surveillance selon la revendication 1, **caractérisé en ce que** le système de suivi d'anode comprend une antenne RFID et un lecteur RFID complémentaire d'une étiquette (10) située sur l'anode.

3. Système de surveillance selon l'une quelconque des revendications 1 et 2, **caractérisé en ce que** le poste d'inspection est situé sur un châssis et l'ensemble de cellules de pesée est situé sur le châssis supportant un système de levage d'anode (7).

4. Système de surveillance selon l'une quelconque des revendications 1 à 3, **caractérisé en ce que** le système de capture d'image est un équipement de triangulation laser.

5. Système de surveillance selon l'une quelconque des revendications 1 à 4, **caractérisé en ce que** le système comprend une unité de mise au rebut, qui comprend un robot en tant que système autonome pour remplacer les anodes qui sont marquées comme étant défectueuses par le poste d'inspection.
